# EUROPÄISCHE PATENTSCHRIFT

(11) **EP 0 501 149 B1**
(45) Veröffentlichungstag und Bekanntmachung des Hinweises auf die Patenterteilung: **03.09.1997**
(21) Anmeldenummer: 92101323.1
(22) Anmeldetag: 28.01.1992
(51) Int. Cl.: F16D 1/08

(54) **Verschluss zur Sicherung einer Kupplungshülse**
Fastening for securing a coupling sleeve
Serrure pour fixation d'un manchon d'accouplement

(30) Priorität: 27.02.1991 DE 4106096
(43) Veröffentlichungstag der Anmeldung: 02.09.1992
(60) Teilanmeldung: 96111887.4
(73) Patentinhaber: GKN Walterscheid GmbH, D-53784 Lohmar (DE)
(72) Erfinder: Entrup, Hubert Grosse, W-5204 Lohmar 1 (DE); Konrad, Mathias, W-5204 Lohmar 1 (DE)
(74) Vertreter: Harwardt, Günther, Dipl.-Ing.

(56) Entgegenhaltungen:
- DE-A- 3 109 117
- DE-C- 3 340 130
- US-A- 2 448 278
- US-A- 4 372 703
- US-A- 4 645 368

## Beschreibung

Die Erfindung betrifft einen Verschluß zur drehfesten und axialen Sicherung einer Kupplungshülse auf einer Zapfwelle eines Traktors oder Antriebszapfen eines Gerätes, wobei die Kupplungshülse eine Bohrung mit einer Vielkeilverzahnung aufweist und die Zapfwelle oder der Antriebszapfen mit einem korrespondierenden Vielkeilprofil und einer umlaufenden Ringnut versehen ist und eine zweite Bohrung der Kupplungshülse zur Aufnahme eines Verschlußelementes rechtwinklig zur Längsachse angeordnet ist und die Ringnut schneidet, wobei das in der zweiten Bohrung aufgenommene Verschlußelement mit mindestens einer Sperrfläche in die Ringnut eingreift und eine lösbare Verbindung zwischen Zapfwelle oder Antriebszapfen und Kupplungshülse bildet.

In der US-A-4645368 ist ein Schnellverschluß mit einer Kupplungshülse und einem Verschlußbolzen beschrieben. Die Kupplungshülse weist eine keilverzahnte Bohrung auf, mit welcher sie auf eine entsprechend keilverzahnte Welle aufschiebbar ist. Die Kupplungshülse besitzt eine quer zur Wellenachse verlaufende Bohrung, die zu einem Ende hin abgesetzt ist. Diese Bohrung schneidet die erstgenannte Bohrung. In die Bohrung ist ein Verschlußbolzen derart eingesetzt, daß er mit seinem einen Abschnitt in dieser geführt ist und mit seinem anderen dazu im Durchmesser abgesetzten Abschnitt aus der Kupplungshülse zur Betätigung herausragt. Ein Teil des in der Bohrung befindlichen Abschnittes dient zum Eingriff in eine Ringnut der keilverzahnten Welle, auf der die Kupplungshülse aufsitzt. Der Verschlußbolzen wird zum Eingriff durch eine Feder beaufschlagt, die sich einerseits an seinem in der Bohrung befindlichen Ende und andererseits an einem Verschlußstopfen abstützt, der in das im Durchmesser größere Ende der Bohrung eingeschraubt ist. Der nach außen ragende Abschnitt des Verschlußbolzens dient zur Betätigung von Hand. Durch Einwirkung von Hand kann der Verschlußbolzen gegen die Kraft der Feder nach innen verlagert werden und gerät damit außer Eingriff zur Ringnut. Die Verschlußkraft wird ausschließlich über die Feder erzeugt und kann nicht verändert werden. Der Widerstand der Feder kann nur so bemessen sein, daß eine Betätigung auch von Hand erfolgen kann.

In der DE-C-3340130 ist eine Wellenverbindung beschrieben, bei der ein verschwenkbarer Verschlußring vorgesehen ist, der auf der Kupplungshülse aufsitzt. In der Kupplungshülse ist eine Aussparung vorgesehen, in der ein Keil radial beweglich geführt ist. In der Verschlußstellung liegt dem Keil eine Verschlußschraube gegenüber, die radial auf den Keil einwirkt, wodurch auch eine Kraft in Umfangsrichtung auf einen Keil der in der zentralen Bohrung der Kupplungshülse einsitzenden Zapfwelle ausgeübt wird, so daß in Umfangsrichtung das Spiel zwischen den Keilverzahnungen von Kupplungshülse und Zapfwelle aufgehoben wird.

Die oben beschriebenen Verschlüsse sind als Schnellverschlüsse gedacht. Sie sind daher mit Spiel und zwar in Axialrichtung und/oder in Drehmomentübertragungsrichtung behaftet. Beim Einsatz im Zusammenhang mit Geräten, bei denen in Dreh- und/oder Achsrichtung eine schwingende Beanspruchung für die Verbindung eintritt, kann das Ausschlagen des Zahnprofils oder der Verschlußelemente die Folge sein.

Der Erfindung liegt daher die Aufgabe zugrunde, einen Verschluß vorzuschlagen, der eine axial- und drehspielfreie Verbindung zwischen der Kupplungshülse und der Zapfwelle durch eine spielfreie Arretierung gewährleistet.

Diese Aufgabe wird erfindungsgemäß dadurch gelöst, daß das Verschlußelement aus einem Kopf mit einem Außengewinde und einem Innensechskant und einer Schraubbolzenverlängerung mit einem zylindrischen Führungsabschnitt und einem die Sperrfläche bildenden konischen, kegeligen oder kugeligen Abschnitt besteht, welcher in die Ringnut eingreift, daß die durchgehende Bohrung entsprechend teilweise als Gewindebohrung und teilweise dazu radial abgesetzt zylindrisch ausgebildet ist, daß die Schraubbolzenverlängerung mit ihrer Stirnfläche an der nach innen weisenden Stirnfläche des Kopfes abgestützt ist und daß der Kopf durch Einschrauben in die Gewindebohrung die Schraubbolzenverlängerung in die Ringnut drückt.

Das Verschlußelement stützt sich mit der Sperrfläche seiner Schraubbolzenverlängerung unmittelbar in der Ringnut der Zapfwelle ab, so daß die Zapfwelle über die Sperrfläche des Verschlußelementes mit der Kupplungshülse kraftschlüssig verbunden ist. Gleichzeitig wird eine drehspielfreie Verbindung durch ein Verspannen in der Ringnut erzielt und durch ein radiales Verlagern der Kupplungshülse gegenüber der Zapfwelle eine spielfreie Axialverspannung erreicht. Hierbei wird durch die radiale Verlagerung der Kupplungshülse die Zapfwelle mit ihrem Vielkeilprofil in die in der zweiten Bohrung befindliche Vielkeilverzahnung der Kupplungshülse gedrückt. Die Verbindung ist dadurch in beiden Drehrichtungen spielfrei. Dies ist deshalb möglich, weil die Form der Vielkeilverzahnung so gestaltet ist, daß nur die Flanken ein Drehmoment übertragen. Ferner wird hierdurch eine Beanspruchung des Gewindes beim Lösen des Verschlusses vermieden.

In Ausgestaltung des Verschlußelementes ist vorgesehen, daß der Kopf mit der nach innen weisenden Stirnfläche an einer kugeligen Stirnfläche der Schraubbolzenverlängerung anliegt.

Damit die Zurückführung der Schraubbolzenverlängerung erleichtert wird, ist vorgesehen, daß der Kopf und die Schraubbolzenverlängerung drehbar miteinander verbunden sind. Als drehbare Verbindung zwischen Kopf und Schraubbolzenverlängerung eignet sich beispielsweise eine Vernietung der beiden Teile.

Die Erfindung wird anhand von mehreren in den nachfolgenden Zeichnungsfiguren dargestellten Ausführungsbeispielen näher erläutert.

Es zeigt
- Fig. 1: einen Traktor mit angehängtem Gerät, welches über eine Gelenkwelle angetrieben wird,
- Fig. 2: eine Seitenansicht einer Zapfwelle bzw. eines Antriebszapfens der ersten Ausführungsform,
- Fig. 3: einen Schnitt einer Ausführungsform mit einem aus zwei Teilen bestehenden Verschlußelement,
- Fig. 4: einen Schnitt einer Ausführungsform eines Verschlußelementes dessen beide Teile miteinander drehbar verbunden sind und

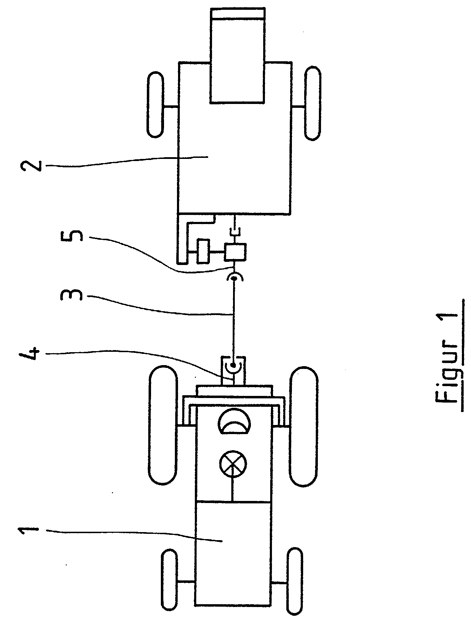

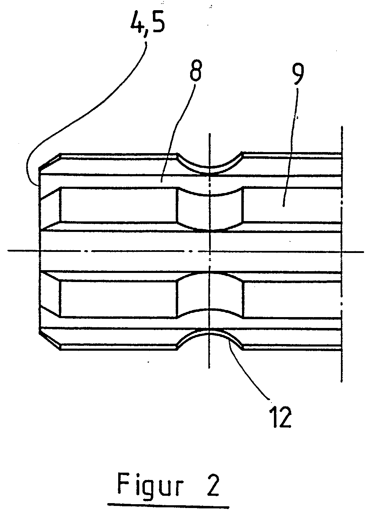

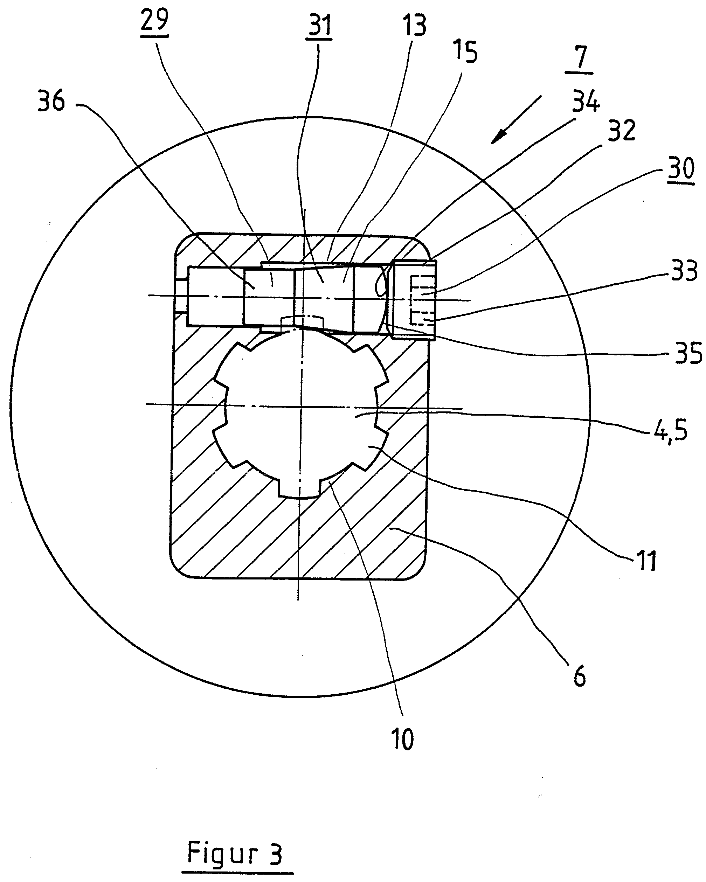

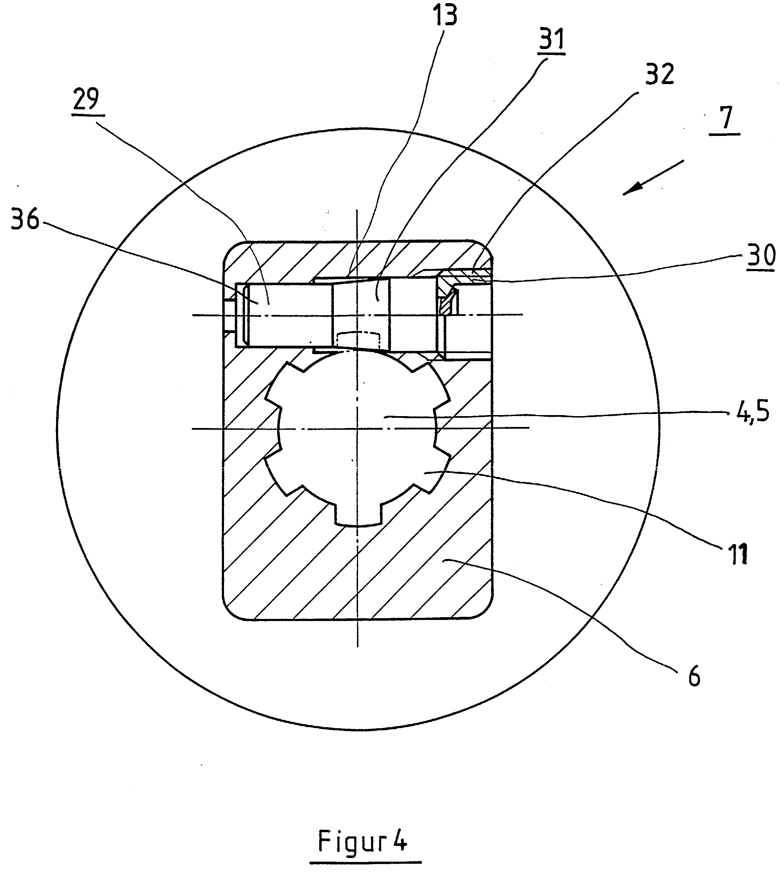

In Fig. 1 ist ein Traktor mit angehängtem Gerät 2 dargestellt, welches von dem Traktor 1 angetrieben wird. Zum Antrieb des Gerätes 2 ist eine Gelenkwelle 3 vorgesehen, welche mit einem Ende auf die Zapfenwelle 4 des Traktors 1 aufgesteckt ist und mit dem zweiten Ende mit einem Antriebszapfen 5 des Gerätes 2 verbunden ist. Zur Verbindung der Gelenkwelle mit der Zapfwelle 4 und/oder dem Antriebszapfen 5 kann eine Kupplungshülse vorgesehen sein, die mit dem Verschluß ausgestattet ist, wie er im Zusammenhang mit den Figuren 3 und 4 näher beschrieben ist. In den Figuren 3 und 4 sind die Verschlüsse 7 jeweils in der Verschlußstellung gezeigt. Die Zapfwelle 4 bzw. der Antriebszapfen 5 weisen entsprechend Figur 2 ein Vielkeilprofil 8 auf, welches aus mehreren umfangsverteilten Zähnen 9 besteht. Die Zapfwelle 4 bzw. der Antriebszapfen 5 weisen im Abstand zu ihrem Ende eine Ausnehmung in Form einer Ringnut 12 auf, welche umlaufend um die Zapfwelle 4 bzw. den Antriebszapfen 5 ausgestaltet ist und in die Zähne 9 eingeschnitten sind. Im Querschnitt gesehen stellt die Ausnehmung einen Kreisbogen dar. Die Kupplungshülse 6 gemäß Figuren 3 bis 5 weist eine Vielkeilverzahnung 10 auf, welche zu den Zähnen 9 der Zapfwelle 4 korrespondierende Ausnehmungen 11 entsprechend der Anzahl der vorhandenen Zähne 9 aufweist.

Die Kupplungshülse 6 ist mit einer zweiten, abgesetzten Bohrung 13 versehen, welche zur Aufnahme des Verschlußelementes 29 vorgesehen ist. Die Bohrung 13 ist rechtwinklig zur Längsachse der Zapfwelle 4 und mit ihrer Wandung korrespondierend zum radialen Abstand der Ringnut 12 angordnet. Das Verschlußelement 29 greift mit einer Sperrfläche 15 in die Ringnut ein und bewirkt eine kraftschlüssige Verbindung zwischen der Kupplungshülse 6 und Zapfwelle 4 bzw. dem Antriebszapfen 5. Das Verschlußelement 29 selbst ist in den Zeichnungsfiguren 3 und 4 unterschiedlich ausgeführt und wird im nachfolgenden näher beschrieben.

In Figur 3 ist ein Verschluß 7 mit einem aus zwei Teilen bestehenden Verschlußelement 29 dargestellt, das aus einem Kopf 30 und einer Schraubbolzenverlängerung 31 besteht, welche miteinander nur in punktförmiger Anlage sind. Der Kopf 30 weist ein Außengewinde 32 und einen Innensechskant 33 auf. Die nach innen weisende Stirnfläche 34 des Kopfes 30 liegt an einer kugeligen Stirnfläche 35 der Schraubbolzenverlängerung 31 an. Die Schraubbolzenverlängerung 31 besteht im weiteren aus einem Führungsabschnitt 36 und einem kegeligen oder konischen Abschnitt. Der konische Abschnitt greift in die Ringnut der Zapfwelle 4 bzw. des Antriebszapfens 5 zur Verriegelung ein. Eine spielfreie Verbindung zwischen der Kupplungshülse 6 und der Zapfwelle 4 bzw. dem Antriebszapfen 5 erfolgt durch ein Einschrauben des Kopfes 30 in die Bohrung 13 der Kupplungshülse 6. Über die punktförmige Anlage auf der kugeligen Stirnfläche 35 wird die Schraubbolzenverlängerung 31 in die Ringnut zur kraftschlüssigen Verriegelung eingedrückt. Die Bohrung 13 der Kupplungshülse 6 weist zum Einschrauben des Kopfes 30 teilweise einen Gewindeabschnitt auf, während zum gegenüberliegenden Ende die Bohrung 13 mehrfach radial abgestuft ist. Zum Lösen der Verbindung zwischen der Kupplungshülse 6 und der Zapfwelle 4 bzw. dem Antriebszapfen 5 muß der Kopf 30 aus dem Gewindeabschnitt der Bohrung 13 herausgedreht werden und durch das Einführen eines Dornes in das offene Ende der Bohrung 13 kann die Schraubbolzenverlängerung 31 herausgeschlagen werden.

In Figur 4 sind der Kopf 30 und die Schraubbolzenverlängerung 31 des Verschlußelementes 29 drehbar, zum Beispiel über eine Vernietung miteinander verbunden.

### Bezugszeichenliste

- 1: Traktor
- 2: Gerät
- 3: Gelenkwelle
- 4: Zapfwelle
- 5: Antriebszapfen
- 6: Kupplungshülse
- 7: Verschluß
- 8: Vielkeilprofil der Zapfwelle
- 9: Zähne
- 10: Vielkeilverzahnung der Kupplungshülse
- 11: Ausnehmung
- 12: Ringnut
- 13: zweite Bohrung der Kupplungshülse
- 14 15: Sperrfläche
- 20: konischer Abschnitt
- 29: Verschlußelement
- 30: Kopf
- 31: Schraubbolzenverlängerung
- 32: Außengewinde
- 33: Innensechskant
- 34: Stirnfläche
- 35: Stirnfläche
- 36: Führungsabschnitt
- 37: Feder

## Patentansprüche

1. Verschluß (7) zur drehfesten und axialen Sicherung einer Kupplungshülse (6) auf einer Zapfwelle eines Traktors (1) oder Antriebszapfen (5) eines Gerätes (2), wobei die Kupplungshülse (6) eine Bohrung mit einer Vielkeilverzahnung (10) aufweist und die Zapfwelle (4) oder der Antriebszapfen (5) mit einem korrespondierenden Vielkeilprofil (8) und einer umlaufenden Ringnut (12) versehen ist und eine zweite Bohrung (13) der Kupplungshülse (6) zur Aufnahme eines Verschlußelementes rechtwinklig zur Längsachse angeordnet ist und die Ringnut (12) schneidet, wobei das in der zweiten Bohrung (13) aufgenommene Verschlußelement mit mindestens einer Sperrfläche (15) in die Ringnut (12) eingreift und eine lösbare Verbindung zwischen Zapfwelle (4) oder Antriebszapfen (5) und Kupplungshülse (6) bildet,
dadurch gekennzeichnet,
daß das Verschlußelement (29) aus einem Kopf (30) mit einem Außengewinde (32) und einem Innensechskant (33) und einer Schraubbolzenverlängerung (31) mit einem zylindrischen Führungsabschnitt (36) und einem die Sperrfläche (15) bildenden konischen, kegeligen oder kugeligen Abschnitt (20) besteht, welcher in die Ringnut (12) eingreift, daß die durchgehende Bohrung (13) entsprechend teilweise als Gewindebohrung und teilweise dazu radial abgesetzt zylindrisch ausgebildet ist, daß die Schraubbolzenverlängerung (31) mit ihrer Stirnfläche (35) an der nach innen weisenden Stirnfläche (34) des Kopfes (30) abgestützt ist und daß der Kopf (30) durch Einschrauben in die Gewindebohrung die Schraubbolzenverlängerung (31) in die Ringnut (12) drückt.

2. Verschluß nach Anspruch 1,
dadurch gekennzeichnet,
daß die Stirnfläche (35) der Schraubbolzenverlängerung (31) kugelig ausgebildet ist.

3. Verschluß nach Anspruch 1,
dadurch gekennzeichnet,
daß der Kopf (30) und die Schraubbolzenverlängerung (31) drehbar miteinander verbunden sind.

4. Verschluß nach Anspruch 1,
dadurch gekennzeichnet,
daß der Kopf (30) und die Schraubbolzenverlängerung (31) miteinander vernietet sind.

## Claims

1. A fastening (7) for axially and rotationally securing a coupling sleeve (6) on a power take-off shaft of a tractor (1) or driving journal (5) of an implement, with the coupling sleeve (6) comprising a bore with multi-spline toothing (10) and with the power take-off shaft (4) or the driving journal (5) being provided with a corresponding multi-spline profile (8) and a continuous annular groove (12) and with a second bore (13) of the coupling sleeve (6) for receiving a fastening element being arranged at a right angle relative to the longitudinal axis while intersecing the annular groove (12), with the fastening elment received in the second bore (13) engaging the annular groove (12) by means of at least one locking face (15) while forming a releasable connection between the power take-off shaft (4) or the driving journal (5) and the coupling sleeve (6),
characterised in
that the fastening element (29) consists of a head (30) with an outer thread (32) and an inner hexagon (33) and a threaded pin extension (31) with a cylindrical guiding portion (36) and a conical, tapered or spherical portion (20) which forms the locking face (15) and engages the annular groove (12), that, accordingly, the continuous bore (13) is partially provided in the form of a threaded bore and partially in a cylindrical form radially stepped relative thereto, that the threaded pin extension (31) is supported by means of its end face (35), on the inwardly pointing end face (34) of the head (30) and that the head (30), by being threaded into the threaded bore, pushes the threaded pin extension (31) into the annular groove (12).

2. A fastening according to claim 1,
characterised in
that the end face (35) of the threaded pin extension (31) comprises a spherical shape.

3. A fastening according to claim 1,
characterised in
that the head (30) and the threaded pin extension (31) are rotatably connected to one another.

4. A fastening according to claim 1,
characterised in
that the head (30) and the threaded pin extension (31) are riveted to one another.

## Revendications

1. Obturateur (7) pour le blocage en rotation et axial d'une douille d'accouplement (6) sur un arbre de prise de force d'un tracteur (1) ou un tourrillon d'entraînement (5) d'un appareil (2), ladite douille d'accouplement (6) comportant un perçage avec une denture à coins multiples (10), et l'arbre de prise de force (4) ou le tourrillon d'entraînement (5) étant pourvu d'un profil à coins multiples (8) correspondant et d'une gorge annulaire périphérique (12), et un second perçage (13) de la douille d'accouplement (6) destiné à recevoir un élément d'obturation est agencé à angle droit par rapport à l'axe longitudinal et recoupe la gorge annulaire (12), et l'élément d'obturation reçu dans le second perçage (13) s'engage avec au moins une surface de blocage (15) dans la gorge annulaire (12) et forme une liaison détachable entre l'arbre de prise de force (4) ou le tourrillon d'entraînement (5) et la douille d'accouplement (6),
caractérisé en ce que :
l'élément d'obturation (29) est constitué par une tête (30) avec un filetage extérieur (32) et avec une empreinte creuse hexagonale (33), et par un prolongement en tige filetée (31) avec un tronçon de guidage cylindrique (36) et avec un tronçon conique, tronconique, ou sphérique (20) qui constitue la surface de blocage (15) et s'engage dans la gorge annulaire (12), en ce que le perçage traversant (13) est réalisé de façon correspondante partiellement sous forme d'un perçage taraudé et partiellement d'un perçage cylindrique radialement en retrait par rapport celui-ci, en ce que le prolongement en tige filetée (31) s'appuie par sa surface frontale (35) contre la surface frontale (34) de la tête (30) tournée vers l'intérieur, et en ce que la tête (30) pousse le prolongement en tige filetée (31) dans la gorge annulaire (12), lors de son vissage dans le perçage taraudé.

2. Obturateur selon la revendication 1, caractérisé en ce que la surface frontale (35) du prolongement en tige filetée (31) est réalisée sous forme sphérique.

3. Obturateur selon la revendication 1, caractérisé en ce que la tête (30) et le prolongement en tige filetée (31) sont reliés en rotation l'un avec l'autre.

4. Obturateur selon la revendication 1, caractérisé en ce que la tête (30) et le prolongement en tige filetée (31) sont rivetés l'un avec l'autre.
